# EUROPEAN PATENT APPLICATION

(11) **EP 4 838 977 A1**
(43) Date of publication of application: **11.11.2026**
(21) Application number: 24921772.0
(22) Date of filing: 19.12.2024
(51) Int. Cl.: H04W 72/044

(54) **COMMUNICATION METHOD, COMMUNICATION APPARATUS, NETWORK DEVICE, AND TERMINAL DEVICE**

(30) Priority: 01.02.2024 CN 202410144869
(71) Applicant: Honor Device Co., Ltd., Shenzhen, Guangdong 518040 (CN)
(72) Inventor: CHI, Liangang, Shenzhen, Guangdong 518040 (CN)
(74) Representative: Gill Jennings & Every LLP
(86) International application number: PCT/CN2024/140479
(87) International publication number: WO 2025/161750

(57) **Abstract**

A communication method, a communication apparatus, a network device, and a terminal device are disclosed, and relate to the field of communication technologies and the field of satellite communication technologies. For a network device, the method includes: sending first mode configuration information, where the first mode configuration information includes mode information and/or beam position information, the first mode configuration information is carried in a system information block SIB, radio resource control RRC signaling, or media access control control element MAC CE signaling, and the mode information includes a transmission mode identifier and transmission time configuration information of a beam. A user equipment UE can obtain the mode information and/or the beam position information by receiving and parsing the first mode configuration information, and further obtain related information of the beam. The UE may obtain position-related information and/or time-related information of the beam according to the first mode configuration information, and use the position-related information and/or the time-related information in subsequent satellite communication, to help the terminal device implement an efficient satellite communication function.

## Description

This application claims priority to Chinese Patent Application No. 202410144869.7, filed with the China National Intellectual Property Administration on February 1, 2024 and entitled "COMMUNICATION METHOD, COMMUNICATION APPARATUS, NETWORK DEVICE, AND TERMINAL DEVICE", which is incorporated herein by reference in its entirety.

### TECHNICAL FIELD

This application relates to the field of communication technologies, and in particular, to a communication method, a communication apparatus, a network device, and a terminal device.

### BACKGROUND

Because conventional terrestrial networks cannot provide seamless signal coverage, especially in places in which base stations cannot be deployed, such as oceans, deserts, and air, satellite communication is considered as an important aspect of development of wireless communication technologies in future.

The satellite communication is communication performed between radio communication devices on the ground by using a satellite as a relay. A satellite communication system includes a satellite part and a ground part. The satellite communication is characterized by a large communication range, achievable communication between any two points within a range covered by a radio wave transmitted by a satellite, and resilience to terrestrial disasters (high reliability). The satellite communication may be used as a supplement to a current cellular communication system on the ground.

To relieve a contradiction between a low payload of a single satellite and a requirement for wide coverage and improve resource usage efficiency of a satellite system, a beam hopping (beam hopping, BH) satellite communication system emerges. In the beam hopping satellite system, only a small quantity of beams (for example, dozens of beams) are equipped on a single satellite, and the beams serve all coverage areas of the single satellite through time division multiplexing. In a beam hopping scenario, how to obtain related information of a beam by a terminal has become a problem to be urgently resolved.

### SUMMARY

To resolve the foregoing problem, this application provides a communication method, a communication apparatus, a network device, and a terminal device, to enable a terminal device to obtain related information of a beam, thereby helping the terminal device implement an efficient satellite communication function.

According to a first aspect, this application provides a communication method, where the method is applied to a network device, and includes: sending first mode configuration information, where the first mode configuration information includes mode information and/or beam position information, the first mode configuration information is carried in a system information block SIB, radio resource control RRC signaling, or media access control control element MAC CE signaling, and the mode information includes a transmission mode identifier and transmission time configuration information of a beam.

In the technical solution provided in this application, the network device may generate the first mode configuration information, and send the mode configuration information to a user equipment. The first mode configuration information may carry the mode information, and the mode information includes the transmission mode identifier and the transmission time configuration information of the beam, so that the user equipment can obtain time-related information of the beam after receiving the mode information. The transmission mode identifier is an identifier of a transmission mode, and uniquely represents the transmission mode. A transmission time configuration of a transmission mode represents a beam transmission time, and the transmission mode is periodic. The first mode configuration information may further carry the beam position information, so that the user equipment can obtain position-related information of the beam after receiving the first mode configuration information. To be specific, the user equipment may obtain related information of the beam by parsing the obtained first mode configuration information, and use the related information in subsequent satellite communication, to help the terminal device implement an efficient satellite communication function.

In a possible implementation, a configuration parameter of time information in the transmission time configuration information is: a coordinated universal time UTC, a global navigation satellite system GNSS time, or at least one of the following:
a system frame number SFN, a slot sequence number, a slot sequence number offset value, an orthogonal frequency division multiplexing OFDM symbol sequence number, or an OFDM symbol offset value.

In a possible implementation, the beam position information includes one or both of the following: position information of the beam or direction information of the beam.

In a possible implementation, the first mode configuration information is configuration information of a beam set, and configuration information of each beam in the beam set further includes one or more of the following: a beam identifier, a resource indicator of a reference signal RS corresponding to the beam, or transmit power information of the beam.

In a possible implementation, when the configuration information of the beam set is sent by using the SIB or the RRC signaling, the method further includes:
sending first MAC CE signaling, where the first MAC CE signaling is used for activating a part or all of the beams in the beam set, and activating one or more transmission modes corresponding to each of the part or all of the beams.

When the network device configures each beam by using the first mode configuration information, a large quantity of beams may be configured, and multiple transmission modes may be further configured for all or a part of the configured beams. A range of activated beams and a range of transmission modes used by the activated beams may be limited by using the first MAC CE signaling.

In a possible implementation, the method further includes:
sending second MAC CE signaling, where the second MAC CE signaling is used for deactivating the part or all of the beams in the beam set, and/or deactivating the one or more transmission modes corresponding to each of the part or all of the beams.

In a possible implementation, the method further includes:
sending group group downlink control information DCI that indicates, in the beam and a transmission mode of the beam that are configured by using the first configuration information or the beam and the transmission mode of the beam that are activated by using the first MAC CE signaling, one or more beams and a transmission mode corresponding to the one or more beams.

The first MAC CE signaling may be used for activating multiple beams, and the first MAC CE signaling may be used for activating multiple corresponding transmission modes for each activated beam. In this case, the group DCI may be further used for configuring a unique transmission mode for each activated beam. In addition, the group DCI may be further used for modifying the transmission mode of each activated beam.

In a possible implementation, cyclic redundancy check CRC of the group DCI is scrambled by using a first radio network temporary identifier RNTI.

In a possible implementation, the group DCI carries beam indication information, and the beam indication information includes at least one of the following:
a beam identifier, a resource indicator of a reference signal RS corresponding to a beam, or beam mode indication information, where the beam mode indication information indicates one or more transmission modes corresponding to a beam.

In a possible implementation, the method further includes:
sending aperiodic-beam indication information by using downlink control information DCI, where the aperiodic-beam indication information includes start time information of a beam and/or duration information of the beam.

In a possible implementation, the DCI is user equipment-specific UE-specific DCI, the UE-specific DCI includes a newly added first field, and the first field indicates a transmission mode of one or more beams.

In a possible implementation, the DCI is user equipment-specific UE-specific DCI, and a transmission configuration indicator TCI field in the UE-specific DCI indicates a transmission mode of one or more beams.

In a possible implementation, the DCI is user equipment-specific UE-specific DCI, and the UE-specific DCI includes a newly added second field; and when the second field is in a first state, it indicates that a transmission configuration indicator TCI field indicates a transmission mode of a beam; or when the second field is in a second state, it indicates that the TCI field indicates a TCI state.

According to a second aspect, this application provides a communication method, where the method is applied to a terminal device, and includes the following steps:
receiving first mode configuration information, where the first mode configuration information includes mode information and/or beam position information, the first mode configuration information is carried in a system information block SIB, radio resource control RRC signaling, or media access control control element MAC CE signaling, and the mode information includes a transmission mode identifier and transmission time configuration information of a beam.

In the technical solution provided in this application, the first mode configuration information may carry the mode information, and the mode information includes the transmission mode identifier and the transmission time configuration information of the beam, so that the user equipment can obtain time-related information of the beam after receiving the mode information. The first mode configuration information may further carry the beam position information, so that the user equipment can obtain position-related information of the beam after receiving the first mode configuration information. To be specific, the user equipment may obtain related information of the beam by parsing the obtained first mode configuration information, and use the related information in subsequent satellite communication, to help the terminal device implement an efficient satellite communication function.

In a possible implementation, the beam position information includes one or both of the following:
beam position information or direction information of the beam.

In a possible implementation, the first mode configuration information is configuration information of a beam set, and configuration information of each beam in the beam set further includes one or more of the following:
a beam identifier, a resource indicator of a reference signal RS corresponding to the beam, or transmit power information of the beam.

In a possible implementation, when the configuration information that is of the beam set and that is sent by using the SIB or the RRC signaling is received, the method further includes:
receiving first MAC CE signaling, where the first MAC CE signaling is used for activating a part or all of the beams in the beam set, and activating one or more transmission modes corresponding to each of the part or all of the beams.

In a possible implementation, the method further includes:
receiving second MAC CE signaling, where the second MAC CE signaling is used for deactivating the part or all of the beams in the beam set, and/or deactivating the one or more transmission modes corresponding to each of the part or all of the beams.

In a possible implementation, the method further includes:
receiving group group downlink control information DCI that indicates, in the beam and a transmission mode of the beam that are configured by using the first configuration information or the beam and the transmission mode of the beam that are activated by using the first MAC CE signaling, one or more beams and a transmission mode corresponding to the one or more beams.

In a possible implementation, cyclic redundancy check CRC of the group DCI is scrambled by using a first radio network temporary identifier RNTI.

In a possible implementation, the group DCI carries beam indication information, and the beam indication information includes at least one of the following:
a beam identifier, a resource indicator of a reference signal RS corresponding to a beam, or beam mode indication information, where the beam mode indication information indicates one or more transmission modes corresponding to a beam.

In a possible implementation, the method includes:
receiving aperiodic-beam indication information, where the aperiodic-beam indication information is carried in downlink control information DCI, and the aperiodic-beam indication information includes start time information of a beam and/or duration information of the beam.

In a possible implementation, the DCI is user equipment-specific UE-specific DCI, the UE-specific DCI includes a newly added first field, and the first field indicates a transmission mode of one or more beams.

In a possible implementation, the DCI is user equipment-specific UE-specific DCI, and a transmission configuration indicator TCI field in the UE-specific DCI indicates a transmission mode of one or more beams.

In a possible implementation, the DCI is user equipment-specific UE-specific DCI, and the UE-specific DCI includes a newly added second field; and when the second field is in a first state, it indicates that a transmission configuration indicator TCI field indicates a transmission mode of a beam; or when the second field is in a second state, it indicates that the TCI field indicates a TCI state.

In a possible implementation, a configuration parameter of time information in the transmission time configuration information is:
a coordinated universal time UTC, a global navigation satellite system GNSS time, or at least one of the following:
a system frame number SFN, a slot sequence number, a slot sequence number offset value, an orthogonal frequency division multiplexing OFDM symbol sequence number, or an OFDM symbol offset value.

According to a third aspect, this application further provides a communication apparatus. The communication apparatus includes a first sending unit. The first sending unit is configured to send first mode configuration information, where the first mode configuration information includes mode information and/or beam position information, the first mode configuration information is carried in a system information block SIB, radio resource control RRC signaling, or media access control control element MAC CE signaling, and the mode information includes a transmission mode identifier and transmission time configuration information of a beam.

According to a fourth aspect, this application further provides a communication apparatus. The communication apparatus includes a first receiving unit. The first receiving unit is configured to receive first mode configuration information, where the first mode configuration information includes mode information and/or beam position information, the first mode configuration information is carried in a system information block SIB, radio resource control RRC signaling, or media access control control element MAC CE signaling, and the mode information includes a transmission mode identifier and transmission time configuration information of a beam.

According to a fifth aspect, this application further provides a network device. The network device includes a processor and a memory, where the processor is coupled to the memory, the memory is configured to store instructions, and the processor is configured to execute a computer program or the instructions stored in the memory, to implement the communication method according to any one of the first aspect or the implementations of the first aspect.

According to a sixth aspect, this application further provides a terminal device. The terminal device includes a processor and a memory, where the processor is coupled to the memory, the memory is configured to store instructions, and the processor is configured to execute a computer program or the instructions stored in the memory, to implement the communication method according to any one of the second aspect or the implementations of the second aspect.

### BRIEF DESCRIPTION OF DRAWINGS

FIG. 1 is a schematic diagram of a non-terrestrial network communication system according to this application;
FIG. 2 is a schematic diagram of a principle of a beam hopping technology according to this application;
FIG. 3 is a flowchart of a communication method according to an embodiment of this application;
FIG. 4 is a schematic diagram of a transmission mode identifier and transmission time configuration information according to an embodiment of this application;
FIG. 5 is a flowchart of another communication method according to an embodiment of this application;
FIG. 6 is a flowchart of still another communication method according to an embodiment of this application;
FIG. 7 is a flowchart of yet another communication method according to an embodiment of this application;
FIG. 8 is a flowchart of still yet another communication method according to an embodiment of this application;
FIG. 9 is a schematic diagram of a communication apparatus according to an embodiment of this application;
FIG. 10 is a schematic diagram of another communication apparatus according to an embodiment of this application;
FIG. 11 is a schematic diagram of a network device according to an embodiment of this application; and
FIG. 12 is a schematic diagram of another user equipment according to an embodiment of this application.

### DESCRIPTION OF EMBODIMENTS

To make persons skilled in the art understand the technical solutions of this application more clearly, the following first describes an application scenario of the solutions of this application.

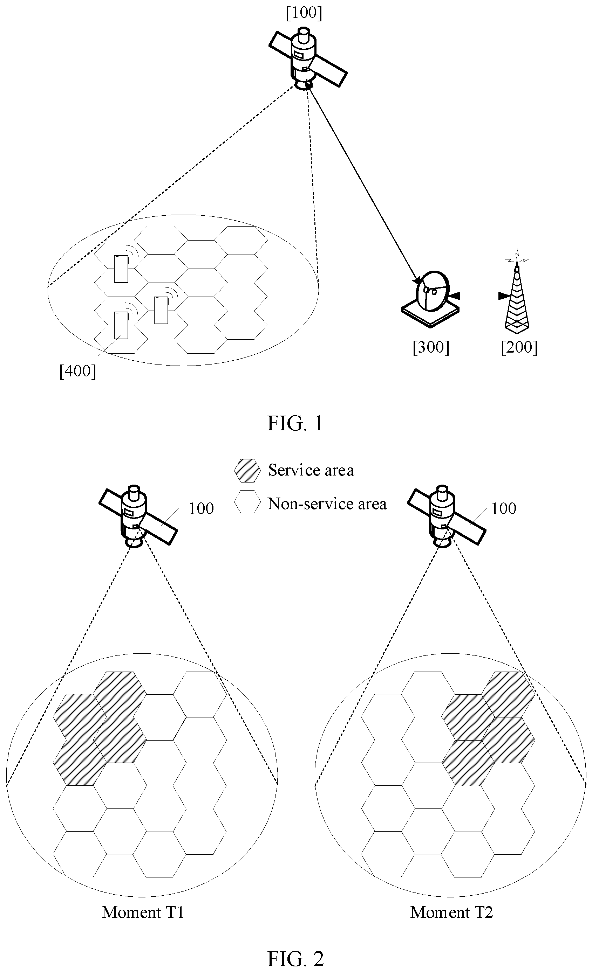

Refer to FIG. 1. FIG. 1 is a schematic diagram of a non-terrestrial network (non-terrestrial networks, NTN) communication system according to this application.

A method provided in this application may be applied to the NTN communication system. As shown in FIG. 1, the NTN communication system includes a satellite (which may also be referred to as a satellite base station) 100, a ground station (which may also be referred to as a gateway or a gateway) (gateway) 300, and a terminal device 400. A base station 200 in the figure may communicate with the ground station 300.

In embodiments provided in this application, the terminal device 400 may be in various forms, for example, a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self-driving, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. Sometimes, the terminal may also be referred to as a terminal device, a user equipment (user equipment, UE), an access terminal device, a vehicle-mounted terminal, an industrial control terminal, a UE unit, a UE station, a mobile station, a mobile console, a remote station, a remote terminal device, a mobile device, a UE terminal device, a terminal device, a wireless communication device, a UE proxy, a UE apparatus, or the like. The terminal may alternatively be a fixed terminal or a mobile terminal.

Terminal devices in the embodiments of this application may also communicate with each other in a device to device (device to device, D2D) manner, a machine to machine (machine to machine, M2M) manner, or the like.

The satellite 100 in the embodiments of this application may provide a radio access service for the terminal device 400, schedule a radio resource for the accessing terminal device 400, provide a reliable wireless transmission protocol and a reliable data encryption protocol, and so on. The satellite 100 may be an artificial earth satellite, a high-altitude aircraft, or the like that serves as a base station, for example, an evolved NodeB (evolutional NodeB, eNB) and a next generation NodeB (next generation node B, gNB), for wireless communication. Alternatively, the satellite may serve as a relay of a base station, and transparently transmit a radio signal of the base station to the terminal device. In this case, the ground station may be considered as a base station for wireless communication. Therefore, in the embodiments of this application, in some embodiments, for example, in a satellite regenerative (regenerative) scenario, a network device may be the satellite base station shown in FIG. 1, that is, include the satellite 100. In some other embodiments, for example, in a satellite transparent (transparent) scenario, the network device may be the ground station 300 shown in FIG. 1. It may be understood that in systems using different radio access technologies, names of devices having functions of the network device may be different, and are not enumerated one by one in this application.

For example, when the satellite 100 operates in a transparent mode, the satellite 100 has a relay and forwarding function. The ground station 300 has functions of a base station or a part of the functions of the base station. In this case, the ground station 300 may be considered as a base station. Alternatively, the base station 200 and the ground station 300 may be separately deployed. In this case, a delay of a feeder link includes a delay from the satellite 200 to the ground station 300 and a delay from the ground station 300 to the base station 200.

For ease of description, a case in which the ground station 300 and the base station 200 are deployed together or are close is used as an example for the transparent mode described below. For a case in which the ground station 300 is far away from the base station 200, the delay of the feeder link is obtained by adding the delay from the satellite 100 to the ground station 300 and the delay from the ground station 300 to the base station 200. It may be understood that FIG. 1 shows an example in which the ground station 300 and the base station 200 are separately deployed, and should not be understood as a limitation on the embodiments of this application. When the satellite 100 operates in a regenerative mode, the satellite 100 has a data processing capability and has functions of a base station or a part of the functions of the base station. In this case, the satellite 100 may be considered as a base station.

Optionally, the satellite 100 may be a geostationary earth orbit (geostationary earth orbit, GEO) satellite, a medium earth orbit (medium earth orbit, MEO) satellite or a low earth orbit (low earth orbit, LEO) satellite on a non-geostationary earth orbit (none-geostationary earth orbit, NGEO), a high altitude platform station (high altitude platform station, HAPS), or the like. A specific type of the satellite is not limited in this application.

The ground station 300 in the embodiments of this application may be configured to connect the satellite 100 to a core network. For example, when the satellite 100 serves as a base station for wireless communication, the ground station 300 may transparently transmit signaling between the satellite 100 and the core network. Alternatively, the ground station 300 may serve as a base station for wireless communication, and the satellite may transparently transmit signaling between the terminal device 400 and the ground station 300. For example, during communication, the ground station 300 may send signaling from the core network to the satellite 100 through the feeder link (or referred to as a feeder link) (feeder link), and the satellite 100 sends the signaling to the terminal device 400 through a service link (service link) between the satellite and the terminal device. Correspondingly, the terminal device 400 may alternatively send signaling to the satellite 100 through the service link, and the satellite 100 sends the signaling to the core network via the ground station 300.

It may be understood that FIG. 1 shows only one satellite 100 and one ground station 300. During actual use, an architecture including multiple satellites and/or multiple ground stations may be used according to a requirement. Each satellite may serve one or more terminal devices, each satellite may correspond to one or more ground stations, each ground station may correspond to one or more satellites, and so on. This is not specifically limited in this application.

As a supplement to a current cellular communication system on the ground, satellite communication has at least the following advantages.

Extended coverage: For regions that cannot be covered by the current cellular communication system or require high coverage costs, such as oceans, deserts, or remote mountainous regions, communication problems can be resolved through the satellite communication.

Emergency communication: A communication connection can be rapidly established through the satellite communication under a condition of unavailable cellular communication infrastructure in extreme cases of disasters such as an earthquake.

Provision of related industry application: For example, for a delay-sensitive service of long-distance transmission, a service transmission delay can be reduced through the satellite communication.

Usually, a single satellite has wide coverage, and may achieve a covering radius of thousands or even tens of thousands of kilometers, and a single beam may cover at least tens or even thousands of meters. Therefore, to support wide-area coverage, hundreds or even thousands of beams usually need to be equipped on a single high-throughput satellite. This causes a huge challenge to a payload of the satellite, especially a low earth orbit (LEO) satellite. Currently, a payload of a single satellite is limited. If a large quantity of beams, for example, hundreds or even thousands of beams, are equipped, and large coverage is implemented, the payload easily exceeds a payload upper limit of the single satellite. Therefore, a beam hopping (beam hopping, BH) technology is applied to the satellite, so that beams serve all coverage areas of the single satellite through time division multiplexing. In the beam hopping technology, a satellite controls a spatial orientation, a bandwidth, a frequency, and transmit power of an on-board multi-beam antenna, and utilizes an advantage of isolation in time and space dimensions, to schedule beams to operate at different moments. A core idea thereof is to achieve communication coverage of a conventional multi-beam system through a small quantity of beam hops.

The time division multiplexing means transmitting different signals in different time periods of a same physical connection to achieve multi-channel transmission. In the time division multiplexing, time is used as a parameter for signal division. Therefore, signals on channels are prohibited from overlapping each other on a time axis.

Refer to FIG. 2. FIG. 2 is a schematic diagram of a principle of the beam hopping technology according to this application.

After the beam hopping technology is applied, a quantity of beams simultaneously transmitted by the satellite 100 is far less than a quantity of beam positions in a coverage area of the satellite 100, the coverage area of the satellite cannot be simultaneously covered, and UEs in different beams of the satellite need to be served through time division multiplexing of the beams.

For example, the beam position may be understood as a coverage area that is of each beam and that is obtained by dividing the coverage area of the satellite in a unit of a single-beam coverage area. As shown in FIG. 2, each grid represents one beam position in FIG. 2, and all beam positions form a coverage area of one satellite. For example, if an orbit height is 1150 km, and a single-beam covering diameter is approximately 26 km, a coverage area of one satellite may cover approximately 700 beam positions. A satellite service covers different areas at different moments. For example, at a moment T1, beams of the satellite cover four beam positions at an upper-left corner in the figure; and at a moment T2, the beams of the satellite cover four beam positions at an upper-right corner in the figure. In a beam hopping scenario, how to obtain related information of a beam by a terminal has become a problem to be urgently resolved.

To resolve the foregoing technical problem, this application provides a communication method, a communication apparatus, a network device, and a terminal device. These are separately described below with reference to the accompanying drawings.

In the specification, claims, and accompanying drawings of this application, terms "first", "second", "third", and the like are used for distinguishing between different objects but are not intended to indicate a particular order.

In the embodiments of this application, words such as "example" or "for example" are used for representing giving an example, an illustration, or a description. Any embodiment or design scheme described as an "example" or "for example" in the embodiments of this application should not be explained as being more preferred or advantageous than another embodiment or design scheme. Exactly, use of the words such as "example" or "for example" is intended to present a related concept in a specific manner.

The embodiments of this application provide a communication method. The following provides detailed descriptions with reference to the accompanying drawings.

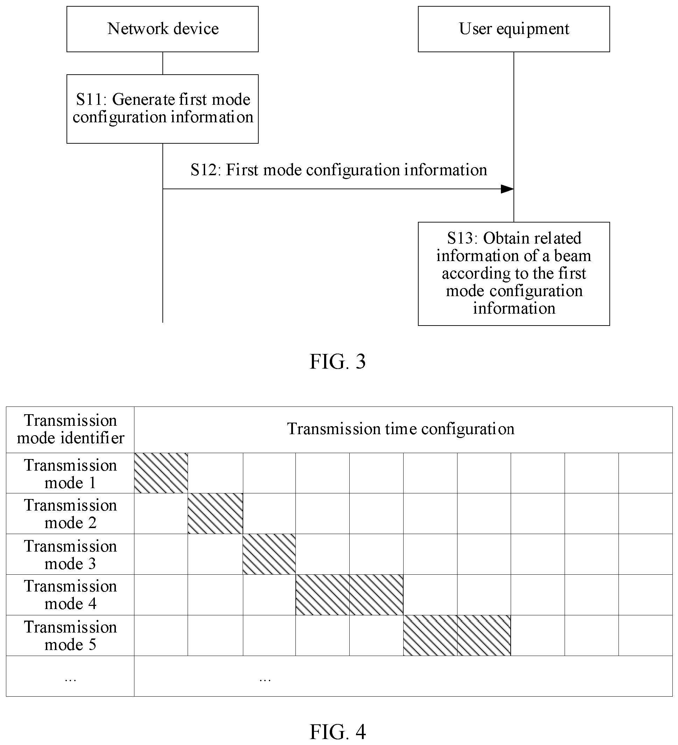

Refer to FIG. 3. FIG. 3 is a flowchart of a communication method according to an embodiment of this application.

The method includes the following steps:
S11: A network device generates first mode configuration information.

In this embodiment of this application, the network device indicates related information of a beam to a user equipment by using the first mode configuration information.

In a possible implementation, the first mode configuration information may be carried in a system information block (system information block, SIB).

In another possible implementation, the first mode configuration information may be carried in radio resource control (radio resource control, RRC) signaling. The RRC signaling is signaling exchanged between the network device and the user equipment at an RRC layer, and can implement radio resource management, connection management, measurement, and the like.

In still another possible implementation, the first mode configuration information may be carried in media access control control element (MAC control element, MAC CE) signaling. The MAC CE is another way of exchanging control information between the user equipment and the network device in addition to the RRC signaling, is signaling exchanged between the network device and the user equipment at a MAC layer, and can implement an uplink synchronization adjustment function, an activation function, a deactivation function, and the like.

The first mode configuration information may include mode information and/or beam position information.

The mode information includes a transmission mode identifier and transmission time configuration information of the beam.

Refer to FIG. 4. FIG. 4 is a schematic diagram of the transmission mode identifier and the transmission time configuration information according to this embodiment of this application.

FIG. 4 shows transmission time windows corresponding to different transmission modes. The transmission mode is periodic, a specific transmission time of the transmission mode may be jointly determined by using a position of a periodic time window and a transmission time window of the transmission mode in the periodic time window, and different transmission modes may have a same periodicity or different periodicities. This is not specifically limited in this embodiment of this application.

The transmission mode identifier is an identifier of a transmission mode, and uniquely represents the transmission mode. A transmission time configuration of the transmission mode can represent a transmission time window in a periodic time window.

A time unit satisfying the following formula (1) is used as a start time unit of the periodic time window: $\left(N⋅n_f+n_s-T_offset\right) mod T = 0$ (1)

N represents a quantity of time units in a system frame, n_f represents a system frame number, n_s represents a time unit number in the system frame, T_offset represents a periodicity offset, T represents a periodicity length, and mod represents a modulo operation.

The time unit may be the system frame (system frame), a subframe (subframe), a slot (time slot), or a mini-slot (mini-slot).

The position of the periodic time window is jointly determined by using the start time unit and the periodicity length.

The transmission time configuration may be represented by the transmission time configuration information. The transmission mode identifier and the transmission time configuration information are in one-to-one correspondence. Time information in transmission time configuration information corresponding to different transmission mode identifiers is different, and the transmission time configuration information may represent duration of a corresponding transmission mode in a periodic time window.

In a possible implementation, the transmission time configuration information in the periodic time window may be start position information in a periodicity and duration information in the periodicity.

In another possible implementation, the periodicity length is divided into one or more time periods. The transmission time configuration information in the periodic time window may be a bitmap, and a value of a bit in the bitmap represents an enabled transmission time period.

Descriptions are provided below by using examples.

In a possible implementation, a configuration parameter of the time information in the transmission time configuration information is an absolute time, and specifically, is a global navigation satellite system (global navigation satellite system, GNSS) time. For example, it is assumed that a transmission mode 1 and a transmission mode 2 have a same periodicity. In a periodic time window, if the transmission mode identifier is the transmission mode 1, corresponding transmission time configuration information is a GNSS time t1 to a GNSS time t2; and if the transmission mode identifier is the transmission mode 2, corresponding transmission time configuration information is a GNSS time t3 to a GNSS time t4. In a next periodic time window, if the transmission mode identifier is the transmission mode 1, corresponding transmission time configuration information is a GNSS time t1+T0 to a GNSS time t2+T0; and if the transmission mode identifier is the transmission mode 2, corresponding transmission time configuration information is a GNSS time t3+T0 to a GNSS time t4+T0. T0 is determined by using a periodicity length of the transmission mode.

The GNSS may be a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), or a satellite-based augmentation system (satellite based augmentation systems, SBAS).

In another possible implementation, a configuration parameter of the time information in the transmission time configuration information is an absolute time, and specifically, is a coordinated universal time (coordinated universal time, UTC). For example, it is assumed that a transmission mode 1 and a transmission mode 2 have different periodicities. In a periodic time window, if the transmission mode identifier is the transmission mode 1, corresponding transmission time configuration information is a UTC time t1 to a UTC time t2; and if the transmission mode identifier is the transmission mode 2, corresponding transmission time configuration information is a UTC time t3 to a UTC time t4. In a next periodic time window, if the transmission mode identifier is the transmission mode 1, corresponding transmission time configuration information is a UTC time t1+T1 to a UTC time t2+T1; and if the transmission mode identifier is the transmission mode 2, corresponding transmission time configuration information is a UTC time t3+T2 to a UTC time t4+T2. T1 and T2 are respectively determined by using a periodicity length of the transmission mode 1 and a periodicity length of the transmission mode 2.

In still another possible implementation, a configuration parameter of the time information in the transmission time configuration information is a relative time, and specifically, is a system frame number (SFN). The SFN may be included in a system message, and is used for group paging and system information scheduling. For example, if the transmission mode identifier is a transmission mode 1, corresponding transmission time configuration information is a system frame number F1 to a system frame number F2; and if the transmission mode identifier is a transmission mode 2, corresponding transmission time configuration information is a system frame number F3 to a system frame number time F4.

In yet another possible implementation, a configuration parameter of the time information in the transmission time configuration information is a relative time, and specifically, is a slot (timeslot) sequence number. For example, if the transmission mode identifier is a transmission mode 1, a corresponding periodicity length is N1 slots, and corresponding transmission time configuration information is a slot sequence number n1 to a slot sequence number n2; and if the transmission mode identifier is a transmission mode 2, a corresponding transmission periodicity is N2 slots, and corresponding transmission time configuration information is a slot sequence number n3 to a slot sequence number n4. For example, in a periodic time window, if the transmission mode identifier is the transmission mode 1, corresponding transmission time configuration information is the slot n1 to the slot n2; and if the transmission mode identifier is the transmission mode 2, corresponding transmission time configuration information is the slot n3 to the slot n4. In a next periodic time window, if the transmission mode identifier is the transmission mode 1, corresponding transmission time configuration information is a slot n1+N1 to a slot n2+N1; and if the transmission mode identifier is the transmission mode 2, corresponding transmission time configuration information is a slot n3+N2 to a slot n4+N2. N1 and N2 are respectively determined by using a periodicity length of the transmission mode 1 and a periodicity length of the transmission mode 2.

In still yet another possible implementation, a configuration parameter of the time information in the transmission time configuration information is a relative time, and specifically, is a slot sequence number offset value. For example, if the transmission mode identifier is a transmission mode 1, corresponding transmission time configuration information is a slot sequence number offset value OFF1; and if the transmission mode identifier is a transmission mode 2, a corresponding slot sequence number offset value is OFF2.

In a further possible implementation, a configuration parameter of the time information in the transmission time configuration information is a relative time, and specifically, is an orthogonal frequency division multiplexing (orthogonal frequency division multiplexing, OFDM) symbol sequence number. In time domain, a length of an OFDM symbol is duration of each OFDM symbol. For example, if the transmission mode identifier is a transmission mode 1, corresponding transmission time configuration information is an OFDM symbol sequence number n1; and if the transmission mode identifier is a transmission mode 2, corresponding transmission time configuration information is an OFDM symbol sequence number n2.

In yet a further possible implementation, a configuration parameter of the time information in the transmission time configuration information is a relative time, and specifically, is an OFDM symbol offset value. For example, if the transmission mode identifier is a transmission mode 1, corresponding transmission time configuration information is an OFDM symbol offset value off1; and if the transmission mode identifier is a transmission mode 2, corresponding transmission time configuration information is an OFDM symbol offset value off2.

Multiple beams may be equipped on a single satellite, and all or a part of the beams may have respective mode information. To be specific, the beams may have different transmission mode identifiers and different transmission time configuration information, or some beams have a same transmission mode identifier and same transmission time configuration information.

When the first mode configuration information includes the mode information, the user equipment may obtain information related to beam time distribution by receiving the first mode configuration information, to be specific, determine, according to an operating mode of the beam, a time for which the beam provides a service.

The first mode configuration information may further include the beam position information.

In a possible implementation, the beam position information may specifically include position information of the beam and direction information of the beam.

The position information of the beam may be referred to as beam position information for short, and refers to coverage area information of the beam. A satellite covers different areas at different moments. For details, refer to the related descriptions in FIG. 2.

The direction information of the beam is an azimuth angle and an elevation angle at a reference point. The user equipment may prompt, according to the direction information of the beam, a user to adjust a posture of the user, so that a direction of an antenna of the user equipment matches a direction of the beam.

When the first mode configuration information includes the beam position information, the user equipment may obtain information related to beam position distribution by receiving the first mode configuration information, to be specific, determine, according to the beam position information, a beam position corresponding to a position of an electronic device of the user.

When the first mode configuration information includes both the mode information and the beam position information, the user equipment may determine, according to the first mode configuration information, a beam position corresponding to a position of the user equipment and a time for which the user equipment is covered by the beams of the satellite, to perform efficient satellite communication.

The first mode configuration information is generated by the network device.

S12: The network device sends the first mode configuration information to the user equipment.

S13: The user equipment obtains the related information of the beam according to the first mode configuration information.

After receiving the first mode configuration information, the user parses the first mode configuration information to determine time information and/or position information related to the beam, and uses the time information and/or the position information in subsequent decision-making for the satellite communication.

In conclusion, according to the solution provided in this embodiment of this application, the network device sends the first mode configuration information to the user equipment, where the first mode configuration information may carry the mode information, and the mode information includes the transmission mode identifier and the transmission time configuration information of the beam, so that the user equipment can obtain time-related information of the beam after receiving the mode information. The first mode configuration information may further carry the beam position information, so that the user equipment can obtain position-related information of the beam after receiving the first mode configuration information. To be specific, the user equipment may obtain the related information of the beam by parsing the obtained first mode configuration information, and use the related information in the subsequent satellite communication, to help the terminal device implement an efficient satellite communication function.

The following provides descriptions with reference to a specific implementation.

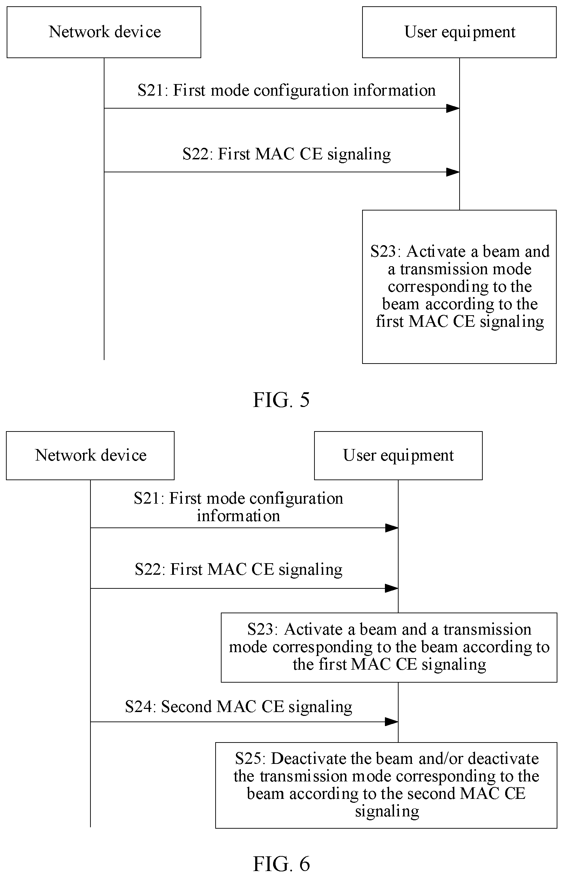

Refer to FIG. 5. FIG. 5 is a flowchart of another communication method according to an embodiment of this application.

S21: A network device sends first mode configuration information.

Multiple beams may be equipped on a single satellite, and the multiple beams may be referred to as a beam set. The first mode configuration information is configuration information of the beam set. As described in the foregoing embodiment, the first mode configuration information may include mode information and/or beam position information. In the following embodiment, an example in which the first mode configuration information includes both the mode information and the beam position information is used for description.

Each beam is correspondingly configured in the first mode configuration information, to be specific, the first mode configuration information includes mode information corresponding to each beam, and includes beam position information corresponding to each beam. Using an example in which N beams are equipped on the single satellite, where N is a positive integer, the first mode configuration information includes mode information and beam position information of an i^{th} beam, where i=1, 2, ..., or N.

The mode information and the beam position information are configuration information of the beam. The configuration information may further include other information. This is described below by using examples.

In a possible implementation, to distinguish between different beams, the configuration information of each beam in the first mode configuration information further includes a beam identifier, and the beam identifier is used for distinguishing between different beams.

In another possible implementation, to distinguish between different beams, the configuration information of each beam in the first mode configuration information further includes a resource indicator of a reference signal (reference signal, RS) corresponding to the beam.

In still another possible implementation, the configuration information of each beam in the first mode configuration information may further include transmit power information of each beam. The transmit power information indicates signal strength of a signal transmitted by using each beam, and is a capability parameter of the beam.

The first mode configuration information includes configuration information of the N beams. In a possible implementation, the first mode configuration information is an information list (list).

In a possible implementation, the first mode configuration information in this embodiment of this application is carried in a SIB or RRC signaling.

S22: The network device sends first MAC CE signaling.

When the network device configures each beam by using the first mode configuration information, the network device may configure a large quantity of beams, and may further configure multiple transmission modes for all or a part of the configured beams. For example, the beams configured in the first mode configuration information form the beam set, each beam in the beam set corresponds to one configured-mode set, and each configured-mode set includes one or more configured modes.

During satellite communication, activated beams need to be known in the beam set, and the activated beams form an activated-beam set. In this case, the activated-beam set is a subset of the beam set. In addition, activated transmission modes need to be known in the configured-mode set, the activated transmission modes form an activated-mode set, and the activated-mode set is a subset of the configured-mode set.

When the first mode configuration information is carried in the SIB or the RRC signaling, the network device may activate a beam and a transmission mode by using MAC CE signaling.

The first MAC CE signaling is used for activating a part or all of the beams in the beam set, and activating one or more transmission modes corresponding to each of the part or all of the beams. Descriptions are provided below by using an example.

For example, the first mode configuration information includes the configuration information of the N beams, where N is a positive integer. In this case, after receiving the first mode configuration information, a user equipment can determine the configuration information of the N beams, but cannot further determine an activated beam and an activated transmission mode corresponding to the activated beam. In this case, the network device sends the first MAC CE signaling, and the first MAC CE signaling may be used for activating a part or all of the N beams. In this embodiment of this application, a quantity of activated beams indicated by the first MAC CE signaling is not specifically limited. For example, the quantity of activated beams may be 1, and may be maximally N.

Specifically, an example in which the first MAC CE signaling indicates to activate two beams, namely, a first beam and a second beam, is used. In this case, the first MAC CE signaling may be further used for activating one or more transmission modes of the first beam and activating one or more transmission modes of the second beam. For example, the activated transmission modes of the first beam may be a transmission mode 1 and a transmission mode 2, and the activated transmission modes of the second beam may be a transmission mode 3 and a transmission mode 4.

A quantity of transmission modes of each beam that are activated by using the first MAC CE signaling is not specifically limited in this embodiment of this application.

S23: The user equipment activates the beam and the transmission mode corresponding to the beam according to the first MAC CE signaling.

When receiving the first MAC CE signaling, the user equipment parses the first MAC CE signaling to determine the activated beam and the transmission mode corresponding to each activated beam, and uses the activated beam and the transmission mode in subsequent satellite communication, to help the terminal device implement an efficient satellite communication function.

The division into the foregoing steps in this embodiment of this application is merely for ease of description, and does not constitute a limitation on the technical solutions of this application. During actual application, persons skilled in the art may add some communication steps between the foregoing steps according to a requirement, or appropriately adjust the foregoing steps. For example, when the first mode configuration information in S21 includes configuration information of only one beam and indicates one or more transmission modes of the beam, the first MAC CE signaling may not be sent. Details are not described herein in this embodiment of this application.

During actual application, after the activation using the first MAC CE signaling is completed, the beam and the transmission mode corresponding to the beam further need to be deactivated subsequently. Details are described below.

Refer to FIG. 6. FIG. 6 is a flowchart of still another communication method according to an embodiment of this application.

A difference between the method shown in FIG. 6 and the method shown in FIG. 5 lies in that the method shown in FIG. 6 further includes the following steps:
S24: The network device sends second MAC CE signaling.

The second MAC CE signaling is used for deactivating the part or all of the beams in the beam set, and/or deactivating the one or more transmission modes corresponding to each of the part or all of the beams.

The second MAC CE signaling is used for deactivation. In this embodiment of this application, quantities of beams and transmission modes that are deactivated by using the second MAC CE signaling are not specifically limited. Still refer to the foregoing example. The first MAC CE signaling is used for activating the first beam and the second beam, the activated transmission modes of the first beam are the transmission mode 1 and the transmission mode 2, and the activated transmission modes of the second beam are the transmission mode 3 and the transmission mode 4.

In a possible implementation, the second MAC CE signaling may be used for deactivating the first beam and the second beam, deactivating the transmission mode 1 and the transmission mode 2 of the first beam, and deactivating the transmission mode 3 and the transmission mode 4 of the second beam. In this case, the second MAC CE signaling is used for deactivating all the beams and all the transmission modes.

In another possible implementation, the second MAC CE signaling may be used for deactivating the first beam, and deactivating the transmission mode 1 and the transmission mode 2 of the first beam. In this case, the second MAC CE signaling is used for deactivating a part of the beams, and deactivating the transmission modes of the deactivated beam.

In still another possible implementation, the second MAC CE signaling may be used for deactivating the first beam, deactivating the transmission mode 1 and the transmission mode 2 of the first beam, and deactivating the transmission mode 3 of the second beam. In this case, the second MAC CE signaling is used for deactivating a part of the beams, deactivating the transmission modes of the deactivated beam, and deactivating a part of transmission modes of a beam.

In yet another possible implementation, the second MAC CE signaling may be used for deactivating the transmission mode 1 of the first beam and deactivating the transmission mode 3 of the second beam. In this case, the second MAC CE signaling is used for deactivating a part of the transmission modes.

S25: The user equipment deactivates the beam and/or deactivates the transmission mode corresponding to the beam according to the second MAC CE signaling.

After receiving the second MAC CE signaling, the user equipment parses the second MAC CE signaling to determine the deactivated beam and the deactivated transmission mode, and uses the deactivated beam and the deactivated transmission mode in the subsequent satellite communication, to help the terminal device implement the efficient satellite communication function.

During actual application, the first MAC CE signaling may be used for activating multiple beams, and the first MAC CE signaling may be used for activating multiple corresponding transmission modes for each activated beam. To further configure a unique transmission mode for each activated beam, the network device may perform configuration by using group (group) downlink control information (downlink control information, DCI). The following provides detailed descriptions with reference to the accompanying drawings.

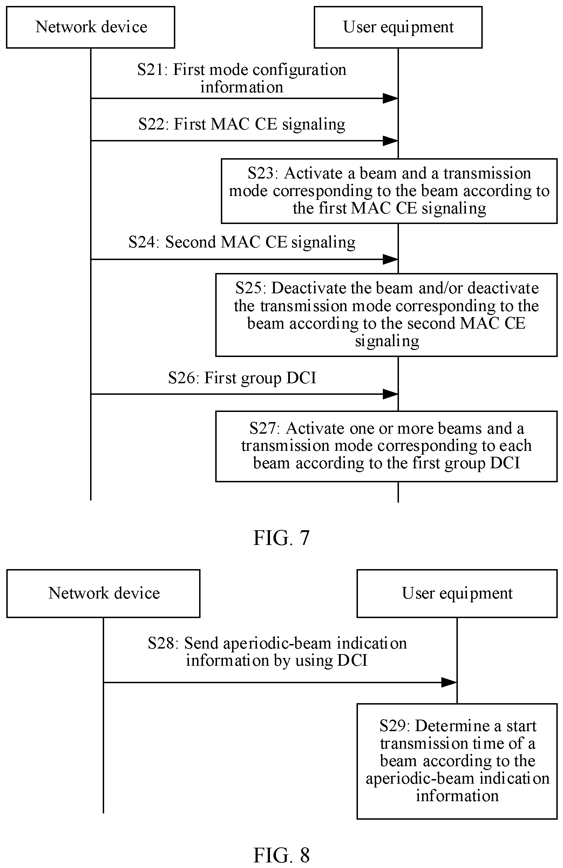

Refer to FIG. 7. FIG. 7 is a flowchart of yet another communication method according to an embodiment of this application.

S26: A network device sends first group DCI.

The first group DCI is sent, to indicate, in a beam and a transmission mode of the beam that are configured by using first configuration information or a beam and a transmission mode of the beam that are activated by using first MAC CE signaling, one or more beams and a transmission mode corresponding to the one or more beams.

The group DCI may include a same uplink and downlink transmission attribute for a group of user equipments, and may indicate the same transmission attribute, for example, a time domain resource and slot structure information, to reduce control signaling overheads.

The first group DCI is a further specific indication provided after the first MAC CE signaling. The first group DCI may indicate a specific transmission mode.

Still using the foregoing example, the N beams are configured by using the first configuration information; and when the first MAC CE signaling is used for activating the first beam and the second beam, the activated transmission modes of the first beam are the transmission mode 1 and the transmission mode 2, and the activated transmission modes of the second beam are the transmission mode 3 and the transmission mode 4, to further configure a specific transmission mode used by a beam, the network device sends the first group DCI. In this embodiment of this application, a quantity of beams indicated by the first group DCI is not specifically limited. In a possible implementation, the quantity of beams indicated by the first group DCI may be less than or equal to a quantity of beams configured by using the first configuration information, or may be less than or equal to a quantity of beams activated by using the first MAC CE.

In a possible implementation, the first group DCI indicates the first beam, and indicates the transmission mode 1 of the first beam. In this case, the first group DCI indicates a part of the beams activated by using the first MAC CE signaling and a transmission mode corresponding to the part of the beams.

In another possible implementation, the first group DCI indicates the first beam, and indicates the transmission mode 1 of the first beam. The first group DCI further indicates the second beam, and indicates the transmission mode 4 of the second beam. In this case, the first group DCI indicates all the beams activated by using the first MAC CE signaling, and indicates a transmission mode corresponding to each beam.

The first group DCI may specifically provide an indication from the beam and the transmission mode of the beam that are configured by using the first configuration information. In this case, the network device may have sent the first MAC CE signaling, or may have not sent the first MAC CE signaling. This is not specifically limited in this embodiment of this application.

For example, the first group DCI may directly indicate the first beam and the transmission mode 1 of the first beam from the N beams and the transmission modes corresponding to the N beams that are configured by using the first configuration information.

For another example, the first group DCI may directly indicate the first beam and the second beam and indicate the transmission mode 1 of the first beam and the transmission mode 4 of the second beam from the N beams and the transmission modes corresponding to the N beams that are configured by using the first configuration information.

In the foregoing descriptions, a beam and a transmission mode of the beam may be indicated by using the group DCI. In another possible implementation, an indicated transmission mode of a beam may alternatively be modified by using group DCI. For example, the first group DCI indicates the transmission mode 4 of the second beam, and second group DCI may indicate the transmission mode 3 of the second beam.

The group DCI in this embodiment of this application is used for indicating a beam and a transmission mode of the beam. The following describes a design scheme of the group DCI.

In a possible implementation, a new group DCI format may be defined, and a quantity of information bits of the new group DCI format is different from a quantity of information bits of an existing DCI format. The new group DCI format is defined, so that a user equipment can determine, according to the group DCI format, that currently received group DCI indicates a beam and a transmission mode of the beam.

In another possible implementation, cyclic redundancy check (cyclic redundancy check, CRC) of the group DCI may be scrambled by using a specific radio network temporary identifier (radio network temporary identity, RNTI). For example, the CRC of the group DCI is scrambled by using a first RNTI.

The RNTI may be used for distinguishing/identifying a connected user equipment, a specific radio channel, a group of user equipments in paging, a group of user equipments subject to power control by an eNB, system information sent by a 5G gNB for all user equipments, or the like. The RNTI is a 16-bit identifier, and a value of the RNTI depends on a type of the RNTI. The RNTI may be used for scrambling CRC of DCI, and the user equipment can decode a received message only by using a correct RNTI.

The group DCI is scrambled by using a particular RNTI, so that the user equipment determines that the group DCI indicates the beam and the transmission mode of the beam.

Further, to indicate the beam and the transmission mode of the beam, the group DCI carries beam indication information.

In a possible implementation, to distinguish between different beams, the beam indication information in the group DCI includes a beam identifier, and the beam identifier is used for distinguishing between different beams.

In another possible implementation, to distinguish between different beams, the beam indication information in the group DCI includes a resource indicator (resource indicator, RI) of a reference signal (reference signal, RS) corresponding to a beam.

In still another possible implementation, to specify the transmission mode, the beam indication information in the group DCI includes beam mode indication information, and the beam mode indication information indicates one or more transmission modes corresponding to a beam.

When the beam indication information does not include the beam identifier and the resource indicator of the reference signal corresponding to the beam, the beam indication information indicates a transmission mode of a beam corresponding to a current position of the user equipment.

In this case, because the beam indication information does not indicate a specific beam, the specific beam needs to be determined by the user equipment. In a possible implementation, after receiving the group DCI, the user equipment determines the transmission mode according to the beam indication information in the group DCI, and then determines current position information of the user equipment according to GNSS data, for example, positions the user equipment to a beam position corresponding to the first beam. In this case, the user equipment may consider that the transmission mode indicated by the group DCI is the transmission mode of the first beam. It may be understood that, the user equipment may alternatively determine the current position information of the user equipment in another positioning manner. Details are not described herein in this embodiment of this application.

S27: The user equipment activates the one or more beams and the transmission mode corresponding to each beam according to the first group DCI.

After receiving the first group DCI, the user equipment parses the first group DC to determine the beam and the transmission mode corresponding to the beam, and uses the beam and the transmission mode in subsequent satellite communication, to help the terminal device implement an efficient satellite communication function.

The division into the foregoing steps in this embodiment of this application is merely for ease of description, and does not constitute a limitation on the technical solutions of this application. During actual application, persons skilled in the art may add some communication steps between the foregoing steps according to a requirement, or appropriately adjust the foregoing steps. In the solution in this embodiment of this application, first mode configuration information may be used for configuring a first quantity of transmission modes for the first beam, and first MAC CE signaling may be further used for configuring a second quantity of transmission modes for the first beam, where the second quantity is less than the first quantity. The group DCI may be further used for configuring a unique corresponding transmission mode for the first beam. However, during actual application, for example, when the first MAC CE signaling in S22 may indicate one transmission mode corresponding to each activated beam, because the transmission mode has been uniquely determined, the network device may not send the first group DCI to indicate the specific transmission mode. Details are not described herein in this embodiment of this application.

In the foregoing embodiment, when the network device configures the transmission mode of the beam, the transmission mode of the beam periodically changes. During actual application, the beam may alternatively be configured to be aperiodically sent, that is, a transmission time of the beam is aperiodic. This is different from a periodic transmission mode. In this case, it may be understood that the transmission time of the beam starts from a time point a, and ends after lasting for a time period T.

Refer to FIG. 8. FIG. 8 is a flowchart of still yet another communication method according to an embodiment of this application.

S28: A network device sends aperiodic-beam indication information by using DCI.

The aperiodic-beam indication information includes start time information of a beam and/or duration information of the beam.

In a possible implementation, the aperiodic-beam indication information includes the start time information of the beam. In this case, the duration information of the beam may be agreed on by the network device and a user equipment in advance, and is not included in the aperiodic-beam indication information.

In another possible implementation, the aperiodic-beam indication information includes the start time information of the beam and/or the duration information of the beam.

The following specifically describes an implementation of scheduling the DCI to indicate an aperiodic beam.

The DCI may be specifically user equipment-specific DCI (UE-specific DCI), and the UE-specific DCI indicates downlink or uplink scheduling information for each user equipment.

In a possible implementation, the UE-specific DCI includes a newly added first field, and the first field indicates a transmission mode of one or more beams. In other words, a new field is added to indicate the transmission mode of the one or more beams.

In another possible implementation, a transmission configuration indicator (transmission configuration indicator, TCI) field in the UE-specific DCI indicates a transmission mode of one or more beams. An existing TCI state indication field may indicate the transmission mode of the one or more beams.

In still another possible implementation, a new field and an existing TCI state indication field may jointly indicate a transmission mode of one or more beams.

The UE-specific DCI includes a newly added second field; and when the second field is in a first state, it indicates that a transmission configuration indicator TCI field indicates a transmission mode of a beam; or when the second field is in a second state, it indicates that the TCI field indicates a TCI state. For example, a flag field is added to the UE-specific DCI. When the flag field is in the first state, it indicates that the TCI field indicates the transmission mode of the beam. When the flag field is in the second state, it indicates that the TCI field is used for implementing an original purpose, that is, indicates the TCI state.

For ease of description, an example in which the aperiodic-beam indication information includes both the start time information of the beam and the duration information of the beam is used below for description.

S29: A user equipment determines a start transmission time of the beam according to the aperiodic-beam indication information.

The user equipment receives the aperiodic-beam indication information, where the aperiodic-beam indication information is carried in the DCI. A moment at which the user equipment receives the aperiodic-beam indication information is a moment T1.

After the user equipment receives the aperiodic-beam indication information, a delay caused by a parsing time and a processing time of the aperiodic-beam indication information is △t. △t is a time agreed on between the user equipment and the network device. A specific time length of the delay △t is not limited in this embodiment of this application. △T is related to a processing capability of the user equipment. For example, △t may be set to 0.5 millisecond, 1 millisecond, one slot length, or multiple slot lengths.

The user equipment uses a moment obtained by delaying the moment T1 by △t as the start transmission time of the beam. In this implementation, time information of the aperiodic beam is indicated, and impact of the delay caused by the processing capability of the user equipment is considered, so that the user equipment implements an efficient satellite communication function.

Based on the communication method provided in the foregoing embodiments, the embodiments of this application further provide a communication apparatus. The following provides detailed descriptions with reference to the accompanying drawings.

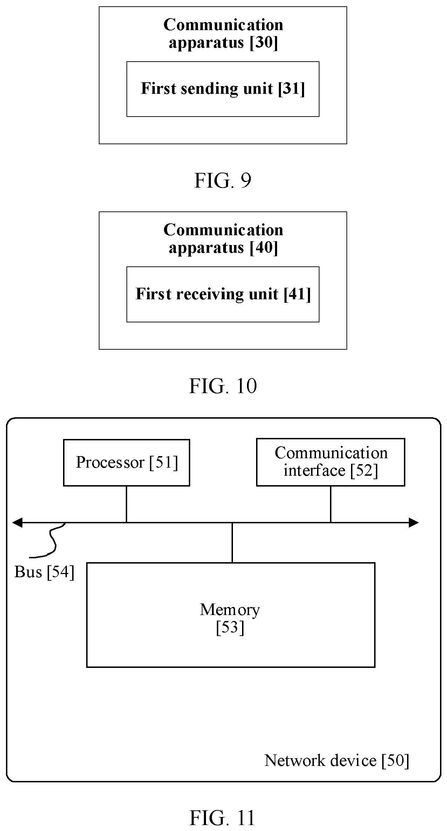

Refer to FIG. 9. FIG. 9 is a schematic diagram of a communication apparatus according to an embodiment of this application.

The communication apparatus 30 includes a first sending unit 31, and the first sending unit 31 is configured to send first mode configuration information. The first mode configuration information includes mode information and/or beam position information, the first mode configuration information is carried in a SIB, RRC signaling, or MAC CE signaling, and the mode information includes a transmission mode identifier and transmission time configuration information of a beam.

For a specific operating principle of the first sending unit 31, refer to the descriptions in the foregoing method embodiments, and details are not described herein again.

The communication apparatus 30 may be used in a network device.

Refer to FIG. 10. FIG. 10 is a schematic diagram of another communication apparatus according to an embodiment of this application.

The communication apparatus 40 includes a first receiving unit 41, and the first receiving unit 41 is configured to receive first mode configuration information.

For a specific operating principle of the first receiving unit 41, refer to the descriptions in the foregoing method embodiments, and details are not described herein again.

The communication apparatus 40 may be used in a user equipment.

An embodiment of this application further provides a network device. The following provides detailed descriptions with reference to the accompanying drawings.

Refer to FIG. 11. FIG. 11 is a schematic diagram of a network device according to an embodiment of this application.

The network device 50 includes: a processor 51, a communication interface 52, a memory 53, and a bus 54. There may be one or more processors 51, communication interfaces 52, and memories 53.

The processor 51 and the memory 53 communicate with each other through the bus 54, and the network device 50 communicates with a user equipment through the communication interface 52.

The processor 51 may include one or more processing units. For example, the processor 51 may include a modem processor, a baseband processor, and the like. Different processing units may be independent components, or may be integrated into one or more processors. A memory may be further disposed in the processor 51, and is configured to store instructions and data.

The processor 51 is configured to invoke program instructions in the memory 53, to perform the foregoing communication method.

In some embodiments, for example, in a satellite regenerative scenario, the network device may be a satellite base station, that is, include a satellite. In some other embodiments, for example, in a satellite transparent scenario, the network device may be a ground station. It may be understood that in systems using different radio access technologies, names of devices having functions of the network device may be different, and are not enumerated one by one in this application.

An embodiment of this application further provides a user equipment. The following provides detailed descriptions with reference to the accompanying drawings.

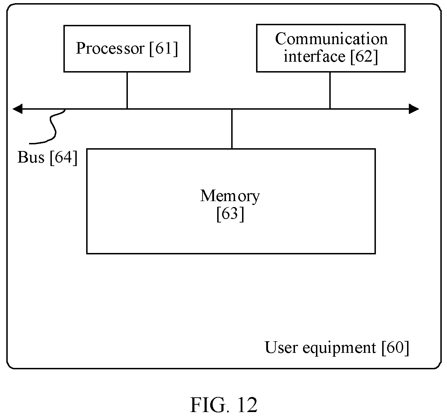

Refer to FIG. 12. FIG. 12 is a schematic diagram of another user equipment according to an embodiment of this application.

The user equipment 60 includes: a processor 61, a communication interface 62, a memory 63, and a bus 64. There may be one or more processors 61, communication interfaces 62, and memories 63.

The processor 61 and the memory 653 communicate with each other through the bus 64, and the user equipment 60 communicates with a network device through the communication interface 62.

The processor 61 may include one or more processing units. For example, the processor 61 may include a modem processor, a baseband processor, and the like. Different processing units may be independent components, or may be integrated into one or more processors. A memory may be further disposed in the processor 61, and is configured to store instructions and data.

The processor 61 is configured to invoke program instructions in the memory 63, to perform the foregoing communication method.

The user equipment 60 may be a mobile phone, a tablet computer, a computer with a wireless transceiver function, a VR terminal device, an augmented reality AR terminal device, a wireless terminal in industrial control, a vehicle-mounted terminal device, a wireless terminal in self-driving, a wireless terminal in remote medical, a wireless terminal in a smart grid, a wireless terminal in transportation safety, a wireless terminal in a smart city, a wireless terminal in a smart home, a wearable terminal device, or the like.

In the technical solutions provided in the embodiments of this application, the network device 50 may generate first mode configuration information, and send the mode configuration information to the user equipment 60. The first mode configuration information may carry mode information, and the mode information includes a transmission mode identifier and transmission time configuration information of a beam, so that the user equipment can obtain time-related information of the beam after receiving the mode information. The transmission mode identifier is an identifier of a transmission mode, and uniquely represents the transmission mode. A transmission time configuration of the transmission mode represents a beam transmission time, and the transmission mode is periodic. The first mode configuration information may further carry beam position information, so that the user equipment can obtain position-related information of the beam after receiving the first mode configuration information. To be specific, the user equipment may obtain related information of the beam by parsing the obtained first mode configuration information, and use the related information in subsequent satellite communication, to help the terminal device implement an efficient satellite communication function.

When the network device 50 configures each beam by using the first mode configuration information, the network device may configure a large quantity of beams, and may further configure multiple transmission modes for all or a part of the configured beams. Further, the network device 50 may limit, by using first MAC CE signaling, a range of an activated beam and a range of a transmission mode used by the activated beam. However, the first MAC CE signaling may still be used for activating multiple beams, and the first MAC CE signaling may be used for activating multiple corresponding transmission modes for each activated beam. In this case, the network device may further configure a unique transmission mode for each activated beam by using group DCI. In addition, the group DCI may be further used for modifying the transmission mode of each activated beam.

When the network device configures the transmission mode of the beam, the transmission mode of the beam may periodically change. However, during actual application, the beam may alternatively be configured to be aperiodically sent, that is, a transmission time of the beam is aperiodic. In this case, the network device sends aperiodic-beam indication information by using DCI, where the aperiodic-beam indication information includes start time information of a beam and/or duration information of the beam. The user equipment determines a start transmission time of the beam according to a moment at which the aperiodic-beam indication information is received and a delay caused by a parsing time and a processing time of the aperiodic-beam indication information, and impact of the delay caused by a processing capability of the user equipment is considered, so that the user equipment implements an efficient satellite communication function.

Further, an embodiment of this application provides a storage medium, and the storage medium stores a program. When the program is executed by a processor, the communication method in the foregoing embodiments is implemented.

The storage medium includes a permanent medium, a non-permanent medium, a removable medium, and a non-removable medium, and information storage can be implemented by using any method or technology. The information may be computer-readable instructions, a data structure, a program module, or other data. Examples of the storage medium include, but are not limited to, a phase-change memory (parameter random access memory, PRAM), a static random access memory (static random access memory, SRAM), a dynamic random access memory (dynamic random access memory, DRAM), another type of random access memory (random access memory, RAM), a read-only memory (read-only memory, ROM), an electrically-erasable programmable read-only memory (electrically-erasable programmable read-only memory, EEPROM), a flash memory, or another memory technology.

It should be understood that, in this application, "at least one" means one or more, and "multiple" means two or more. The term "and/or" is used for describing an association relationship between associated objects and indicates that three relationships may exist. For example, "A and/or B" may indicate the following three cases: only A exists, only B exists, and both A and B exist. A and B may be singular or plural. The character "/" generally indicates an "or" relationship between associated objects. "At least one of the following items (pieces)" or a similar expression thereof refers to any combination of these items, including a single item (piece) or any combination of multiple items (pieces). For example, at least one of a, b, or c may represent: a, b, c, "a and b", "a and c", "b and c", or "a, b, and c", where a, b, and c may be singular or plural.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A communication method, wherein the method is applied to a network device, and comprises:
sending first mode configuration information, wherein the first mode configuration information comprises mode information and/or beam position information, the first mode configuration information is carried in a system information block SIB, radio resource control RRC signaling, or media access control control element MAC CE signaling, and the mode information comprises a transmission mode identifier and transmission time configuration information of a beam.

2. The method according to claim 1, wherein a configuration parameter of time information in the transmission time configuration information is:
a coordinated universal time UTC, a global navigation satellite system GNSS time, or at least one of the following:
a system frame number SFN, a slot sequence number, a slot sequence number offset value, an orthogonal frequency division multiplexing OFDM symbol sequence number, or an OFDM symbol offset value.

3. The method according to claim 1, wherein the beam position information comprises one or both of the following:
position information of the beam or direction information of the beam.

4. The method according to claim 1, wherein the first mode configuration information is configuration information of a beam set, and configuration information of each beam in the beam set further comprises one or more of the following:
a beam identifier, a resource indicator of a reference signal RS corresponding to the beam, or transmit power information of the beam.

5. The method according to claim 4, wherein when the configuration information of the beam set is sent by using the SIB or the RRC signaling, the method further comprises:
sending first MAC CE signaling, wherein the first MAC CE signaling is used for activating a part or all of the beams in the beam set, and activating one or more transmission modes corresponding to each of the part or all of the beams.

6. The method according to claim 5, wherein the method further comprises:
sending second MAC CE signaling, wherein the second MAC CE signaling is used for deactivating the part or all of the beams in the beam set, and/or deactivating the one or more transmission modes corresponding to each of the part or all of the beams.

7. The method according to claim 5, wherein the method further comprises:
sending group downlink control information DCI that indicates, in the beam and a transmission mode of the beam that are configured by using the first configuration information or the beam and the transmission mode of the beam that are activated by using the first MAC CE signaling, one or more beams and a transmission mode corresponding to the one or more beams.

8. The method according to claim 7, wherein cyclic redundancy check CRC of the group DCI is scrambled by using a first radio network temporary identifier RNTI.

9. The method according to claim 7 or 8, wherein the group DCI carries beam indication information, and the beam indication information comprises at least one of the following:
a beam identifier, a resource indicator of a reference signal RS corresponding to a beam, or beam mode indication information, wherein the beam mode indication information indicates one or more transmission modes corresponding to a beam.

10. The method according to claim 1, wherein the method further comprises:
sending aperiodic-beam indication information by using downlink control information DCI, wherein the aperiodic-beam indication information comprises start time information of a beam and/or duration information of the beam.

11. The method according to claim 10, wherein the DCI is user equipment-specific UE-specific DCI, the UE-specific DCI comprises a newly added first field, and the first field indicates a transmission mode of one or more beams.

12. The method according to claim 10, wherein the DCI is user equipment-specific UE-specific DCI, and a transmission configuration indicator TCI field in the UE-specific DCI indicates a transmission mode of one or more beams.

13. The method according to claim 10, wherein the DCI is user equipment-specific UE-specific DCI, and the UE-specific DCI comprises a newly added second field; and when the second field is in a first state, it indicates that a transmission configuration indicator TCI field indicates a transmission mode of the beam; or when the second field is in a second state, it indicates that the TCI field indicates a TCI state.

14. The method according to claim 1, wherein a start time unit of a periodic time window of a transmission mode indicated by the transmission mode identifier is determined according to a quantity of time units in a system frame, a system frame number, a time unit number in the system frame, a periodicity offset, and a periodicity length, and a position of the periodic time window is determined by using the start time unit and the periodicity length.

15. The method according to claim 14, wherein the start time unit is any one of the following:
the system frame SF, a subframe, a slot, or a mini-slot.

16. The method according to claim 14, wherein the transmission time configuration information is start position information in a periodicity and duration information in the periodicity; or the transmission time configuration information is a bitmap, and a value of a bit in the bitmap represents an enabled transmission time period.

17. A communication method, wherein the method is applied to a user equipment UE, and comprises:
receiving first mode configuration information, wherein the first mode configuration information comprises mode information and/or beam position information, the first mode configuration information is carried in a system information block SIB, radio resource control RRC signaling, or media access control control element MAC CE signaling, and the mode information comprises a transmission mode identifier and transmission time configuration information of a beam.

18. The method according to claim 17, wherein the beam position information comprises one or both of the following:
beam position information or direction information of the beam.

19. The method according to claim 17, wherein the first mode configuration information is configuration information of a beam set, and configuration information of each beam in the beam set further comprises one or more of the following:
a beam identifier, a resource indicator of a reference signal RS corresponding to the beam, or transmit power information of the beam.

20. The method according to claim 19, wherein when the configuration information that is of the beam set and that is sent by using the SIB or the RRC signaling is received, the method further comprises:
receiving first MAC CE signaling, wherein the first MAC CE signaling is used for activating a part or all of the beams in the beam set, and activating one or more transmission modes corresponding to each of the part or all of the beams.

21. The method according to claim 20, wherein the method further comprises:
receiving second MAC CE signaling, wherein the second MAC CE signaling is used for deactivating the part or all of the beams in the beam set, and/or deactivating the one or more transmission modes corresponding to each of the part or all of the beams.

22. The method according to claim 20, wherein the method further comprises:
receiving group group downlink control information DCI that indicates, in the beam and a transmission mode of the beam that are configured by using the first configuration information or the beam and the transmission mode of the beam that are activated by using the first MAC CE signaling, one or more beams and a transmission mode corresponding to the one or more beams.

23. The method according to claim 22, wherein cyclic redundancy check CRC of the group DCI is scrambled by using a first radio network temporary identifier RNTI.

24. The method according to claim 22 or 23, wherein the group DCI carries beam indication information, and the beam indication information comprises at least one of the following:
a beam identifier, a resource indicator of a reference signal RS corresponding to a beam, or beam mode indication information, wherein the beam mode indication information indicates one or more transmission modes corresponding to a beam.

25. The method according to claim 17, wherein the method comprises:
receiving aperiodic-beam indication information, wherein the aperiodic-beam indication information is carried in downlink control information DCI, and the aperiodic-beam indication information comprises start time information of a beam and/or duration information of the beam.

26. The method according to claim 25, wherein the method comprises:
determining a start transmission time of the beam according to a delay and the start time information that is of the beam and that is comprised in the aperiodic-beam indication information.

27. The method according to claim 25, wherein the DCI is user equipment-specific UE-specific DCI, the UE-specific DCI comprises a newly added first field, and the first field indicates a transmission mode of one or more beams.

28. The method according to claim 25, wherein the DCI is user equipment-specific UE-specific DCI, and a transmission configuration indicator TCI field in the UE-specific DCI indicates a transmission mode of one or more beams.

29. The method according to claim 25, wherein the DCI is user equipment-specific UE-specific DCI, and the UE-specific DCI comprises a newly added second field; and when the second field is in a first state, it indicates that a transmission configuration indicator TCI field indicates a transmission mode of the beam; or when the second field is in a second state, it indicates that the TCI field indicates a TCI state.

30. The method according to claim 17, wherein a configuration parameter of time information in the transmission time configuration information is:
a coordinated universal time UTC, a global navigation satellite system GNSS time, or at least one of the following:
a system frame number SFN, a slot sequence number, a slot sequence number offset value, an orthogonal frequency division multiplexing OFDM symbol sequence number, or an OFDM symbol offset value.

31. The method according to claim 17, wherein a start time unit of a periodic time window of a transmission mode indicated by the transmission mode identifier is determined according to a quantity of time units in a system frame, a system frame number, a time unit number in the system frame, a periodicity offset, and a periodicity length, and a position of the periodic time window is determined by using the start time unit and the periodicity length.

32. The method according to claim 31, wherein the start time unit is any one of the following:
the system frame SF, a subframe, a slot, or a mini-slot.

33. The method according to claim 31, wherein the transmission time configuration information is start position information in a periodicity and duration information in the periodicity; or the transmission time configuration information is a bitmap, and a value of a bit in the bitmap represents an enabled transmission time period.

34. A communication apparatus, comprising a first sending unit, wherein
the first sending unit is configured to send first mode configuration information, wherein the first mode configuration information comprises mode information and/or beam position information, the first mode configuration information is carried in a system information block SIB, radio resource control RRC signaling, or media access control control element MAC CE signaling, and the mode information comprises a transmission mode identifier and transmission time configuration information of a beam.

35. A communication apparatus, comprising a first receiving unit, wherein
the first receiving unit is configured to receive first mode configuration information, wherein the first mode configuration information comprises mode information and/or beam position information, the first mode configuration information is carried in a system information block SIB, radio resource control RRC signaling, or media access control control element MAC CE signaling, and the mode information comprises a transmission mode identifier and transmission time configuration information of a beam.

36. A network device, comprising a processor and a memory, wherein
the processor is coupled to the memory;
the memory is configured to store instructions; and
the processor is configured to execute a computer program or the instructions stored in the memory, to implement the communication method according to any one of claims 1 to 16.

37. A terminal device, comprising a processor and a memory, wherein
the processor is coupled to the memory;
the memory is configured to store instructions; and
the processor is configured to execute a computer program or the instructions stored in the memory, to implement the communication method according to any one of claims 17 to 33.
